(19) Europäisches Patentamt
European Patent Office
Office européen des brevets

(11) Publication number: **0 481 659 A1**

(12) # EUROPEAN PATENT APPLICATION

(21) Application number: **91309238.3**

(22) Date of filing: **08.10.91**

(51) Int. Cl.5: **B01D 71/02**, //B01D69/10, B01J29/00

(30) Priority: **19.10.90 GB 9022837**

(43) Date of publication of application:
**22.04.92 Bulletin 92/17**

(84) Designated Contracting States:
**AT BE CH DE DK ES FR GB GR IT LI LU NL SE**

(71) Applicant: **THE BRITISH PETROLEUM COMPANY P.L.C.**
**Britannic House, 1 Finsbury Circus**
**London EC2M 7BA(GB)**

(72) Inventor: **Barri, Sami Ali Ibrahim**
**The British Petroleum Co. p.l.c., Chertsey Road**
**Sunbury-on-Thames, Middlesex, TW16 7LN(GB)**
Inventor: **Bratton, Graham John**
**The British Petroleum Co. p.l.c., Chertsey Road**
**Sunbury-on-Thames, Middlesex, TW16 7LN(GB)**
Inventor: **Naylor, Timothy de Villiers**
**The British Petroleum Co. p.l.c., Chertsey Road**
**Sunbury-on-Thames, Middlesex, TW16 7LN(GB)**
Inventor: **Tomkinson, Jeremy David**
**The British Petroleum Co. p.l.c., Chertsey Road**
**Sunbury-on-Thames, Middlesex, TW16 7LN(GB)**

(74) Representative: **Scott, Susan Margaret et al**
**BP INTERNATIONAL LIMITED Patents & Agreements Division Chertsey Road**
**Sunbury-on-Thames Middlesex TW16 7LN(GB)**

(54) **Deposition process.**

(57) A process for the deposition of a zeo-type material on a porous metallic support, which comprises immersing at least one surface of the porous metallic support in a synthesis gel which is capable of crystallising to produce a crystalline zeo-type material, and inducing crystallisation of said gel so that zeo-type material crystallises on the support; characterised in that prior to immersion in the gel, said surface of the metallic support has been treated with an acid.

EP 0 481 659 A1

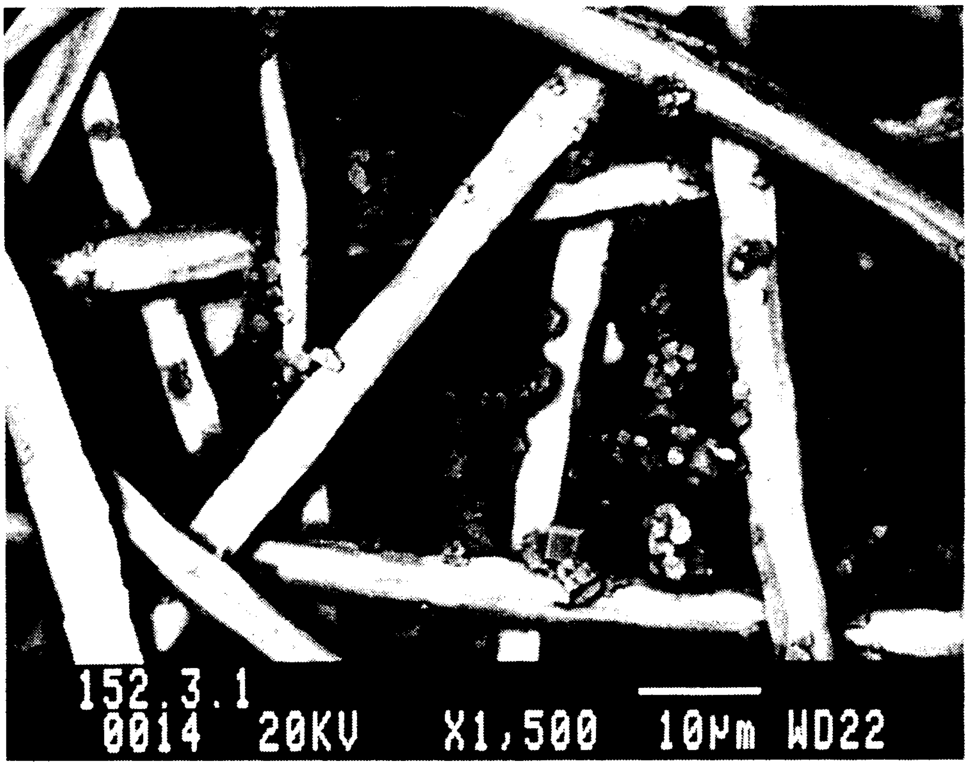


FIG. 2

The present invention relates to a deposition process useful in membrane preparation.

Zeolites and related crystalline materials are well known for their ability to accomplish separations and to act as catalysts. Membranes are well known in separations applications, and membranes incorporating zeolites are known. These membranes are of a number of distinct types.

CA 1235684 claims a filter for substance separation, comprising a substrate made of a porous glass and a zeolite-based film formed directly on the porous glass, the zeolite-based film having a thickness of 1 micron to 500 micron. The filter is prepared by suspending, for example, a borosilicate glass in an aqueous solution of sodium hydroxide and tetrapropylammonium bromide, and heating in an autoclave.

JP-A-63291809 describes a membrane comprising a film of zeolite on a porous alumina carrier.

EP-A-180200 describes a membrane comprising a porous support impregnated with fine particles of a zeolite. The membrane is prepared by permeating, for example, an ultrafiltration membrane, or a porous glass, with an alkaline solution of ultrafine (e.g. less than 75 angstrom diameter) zeolite particles. These particles become lodged in the pores of the support.

EP-A-180200 describes a process for preparing a zeolite membrane in which a zeolite synthesis gel is passed through a microfilter and deposited in a thin film on the surface of a support.

Our copending application internal reference no. 7617 based on UK patent application no 9022836.2 describes a process for the production of a membrane comprising a film of a zeo-type material over the pores of a porous support, which comprises immersing at least one surface of a porous support in a synthesis gel which is capable of crystallising to produce a crystalline zeo-type material; inducing crystallisation of said gel so that zeo-type material crystallises on the support; removing the support from the mix; and repeating these steps one or more times to obtain a membrane in which the zeo-type material is crystallised directly from and bonds directly to the support.

It also describes a novel membrane which comprises crystals of a zeo-type material carried by a porous support characterised in that the crystal growth of the zeo-type material is essentially continuous over the pores of the support and that the zeo-type material is crystallised directly from and bonds directly to the support.

We have found that, when depositing a zeo-type material on a porous metallic support, a specific pretreatment of the support produces an enhanced growth of zeo-type material in the initial immersion and crystallisation step.

Accordingly, the present invention provides a process for the deposition of a zeo-type material on a porous metallic support, which comprises immersing at least one surface of the porous metallic support in a synthesis gel which is capable of crystallising to produce a crystalline zeo-type material, and inducing crystallisation of said gel so that zeo-type material crystallises on the support; characterised in that prior to immersion in the gel, said surface of the metallic support has been treated with an acid.

Any suitable acid may be used. Preferably the acid is a mineral acid, for example hydrochloric, nitric, sulphuric or phosphoric acid. The use of hydrochloric acid is preferred. The acid is suitably used as an aqueous solution. The concentration is not crucial, concentrations in the range of from 0.01 to 5 molar, especially 0.5 to 2 molar, being preferred.

Preferably the support is completely immersed in the acid for the desired period of time, typically from 1 to 24 hours. The treatment may be carried out at any desired temperature, ambient temperature being most convenient.

Zeo-type materials are well known, and are often referred to as molecular sieves. They are characterised by having a crystal structure made up of tetrahedra joined together through oxygen atoms to produce an extended network with channels of molecular dimensions. Any zeo-type material may be used in the present invention, depending on the desired use of the finished membrane. Zeolites, or aluminosilicates, are the best known example of zeo-type materials. Any zeolite may be used in the present invention, for example those having LTA, MEL, MFI or TON structure types as defined in "Atlas of Zeolite Structure Types", Meier and Olsen, 1987, Polycrystal Book Service, Pittsburg USA. Other zeo-type materials which may be used include metallosilicates in which some or all of the aluminium is replaced by another metal, such as gallium, boron, zinc, iron or titanium, and crystalline silicates having zeolite-type structure, such as silicalites as described in US 4061724 or Nature, 280, 664-665 (1979).

A further class of zeo-type materials are the crystalline aluminophosphates ("ALPO's"), silicoaluminophosphates ("SAPO's") and other metalloaluminophosphates. Such materials are described for example in "New Developments in Zeolite Science and Technology", Proceedings of the 7th International Zeolite Conference, Tokyo, 1986, page 103. More recent materials such as ALPO-8, ALPO-54 and MCM-9 may be prepared for example as referred to in Zeolites 9 September 1989, page 436.

A membrane is a continuous structure whose length and width are very much greater than its thickness. It is selectively permeable to liquids or gases. Any suitable porous metallic support having the desired

physical shape may be used in the process of the present invention; suitable forms include for example flat sheet, tubular or spiral wound forms. Typical metals include stainless steels, Inconel, Hastalloy, Fecralloy, chromium and titanium. The metal may be in the form of a fibrous mesh (e.g. Bekipor filters), a combination of fibrous metal with sintered metal particles (e.g. Pall PMM metal filter and Supramesh filter), or sintered metal filters (e.g. Pall PSS filter media). Woven metal filter media may also be used. Inconel, Hastalloy, Fecralloy, Bekipor, Pall and Supramesh are Trade Marks.

The pore size of the support is an important parameter. Many prior art membranes have used supports with very small pore sizes. A major advantage of the present invention is that it enables a support with a large pore size to be used. In particular, the pore diameter can be larger than the average crystal size of the zeo-type material. Large pores are advantageous because they permit the preparation of high surface area membranes, and thus maximise flux. Preferably, the average pore diameter of a support used in the present invention is in the range of from 0.1 to 2000 microns, preferably from 1 to 2000 microns, especially 5 to 200 microns. For pore diameters up to 300 microns, the pore diameter can be determined using the technique of bubble point pressure as defined by ISO4003, and the pore size distribution can be measured using a Coulter porometer (Trade Mark).For larger pore diameters, optical microscopy techniques may be used.

The synthesis gel used in the process of the present invention may be any gel which is capable of producing the desired crystalline zeo-type material. Gels for the synthesis of zeo-type materials are well known, and are described in the prior art given above or, for example, in EP-A-57049, EP-A-104800, EP-A-2899 and EP-A-2900. Standard text books by D W Breck ("Zeolite Molecular Sieves, Structure Chemistry and Use", published by John Wiley, 1974) and P A Jacobs and J A Martens (Studies in Surface Science and Catalysis, No. 33, "Synthesis of High Silica Aluminosilicate Zeolites", published by Elsevier, 1987) describe many such synthesis gels. The process according to the present invention includes conventional syntheses of zeo-type materials, except that the synthesis is carried out in the presence of the porous support. Most commonly, gels are crystallised by the application of heat. Pressure may also be applied, but it is usually convenient to conduct the crystallisation under autogenous pressure.

Preferably, the porous support is completely immersed in the synthesis gel; alternatively, if desired, only one surface of the support may be in contact with the gel. This may be useful, for example, if it is desired to produce a membrane in the form of a tube where only the inside or the outside of the tube needs to be in contact with the gel. It may also be useful if it is desired to produce a membrane containing two different zeolites, one on each side of the support. Use of such a bi-functional membrane would be equivalent to using two separate membranes each carrying a different zeolite.

After the acid treated support has been immersed in one synthesis gel which is then crystallised according to the invention, it may then be removed and immersed in a second gel, and the crystallisation repeated. We have found that, after the first crystallisation, the support has growing upon it a number of zeo-type crystals. These crystals may, however, not be sufficient to produce a continuous crystal growth over the whole surface. After the support has been subjected to a second crystallisation, more crystals have been grown, either directly from the surface of the support or from the surface of the crystals formed in the first crystallisation which have themselves directly grown on the support surface. The process of immersion and crystallisation may be repeated as required, preferably until a complete and continuous coverage of the support surface is obtained. Accordingly, the invention also provides a process for the preparation of a membrane, which comprises a process according to the invention characterised in that, after crystallisation of the initial gel, the support is removed from the mix, and the immersion and crystallisation steps repeated one or more times to obtain the required membrane.

The number of immersions required will of course depend on the pore size of the support, the nature of the zeo-type material and the synthesis conditions; at least 2 immersions are normally essential but more than 2, for example from 3 to 10, immersions may be desirable. The acid treatment process according to the present invention increases the initial coverage of zeo-type material and hence may reduce the total number of immersions required to make a finished membrane.

Preferably, after removal of the support from the mixture after crystallisation, gel and loose material are removed, for example by washing thoroughly, before carrying out any subsequent immersion and crystallisation. The support may also be dried in between each immersion. Drying for at least 12 hours at ambient temperature, at a temperature of 30-50 °C for at least 2 hours, or at a temperature of 80-100 °C for 15 to 30 minutes, are suitable regimes.

Repeated immersion and crystallisation steps enable the production of a membrane using a support with a large pore size. In general, processes used for the preparation of prior art membranes have been such that the only membranes which could be produced were those based on supports having relatively small pores. Such membranes are of very limited commercial usefulness.

The finished membranes prepared according to our copending application have two distinct characteristics. First, the zeo-type material is in direct contact with the surface of the support and directly bonds thereto. The nature of the bonding is not fully understood; it may be primarily chemical bonding and/or physical bonding, but in either event the crystals form directly from the support surface without any intermediate "glue" or binder. This is distinct from prior art membranes, for example those described in EP-A-180200, where pre-formed crystals of zeolite are brought together with the pores of a support and, in effect, glued or cemented in position. In the finished membranes of our co-pending application, crystal growth begins at the support surface, and continues outwards continuously, until it cross-links with the crystals growing from the opposite sides of the pores of the support and forms an essentially continuous film of zeo-type material.

Secondly, the zeo-type material presents an essentially continuous crystal growth, each individual crystal growing out from the surface of the support or from the surface of adjacent crystals. This is, again, distinct from prior art membranes where pre-formed crystals are brought into intimate contact and "glued" together, or where coverage of the surface of a support is incomplete. There is no intermediate layer of amorphous material between the support and the crystal growth.

The growth of zeo-type material is essentially continuous over the pores of the support. Preferably, it is essentially continuous over the whole surface of the support. In this case, the layer of zeo-type material may for example be 100 microns thick or even thicker; it may for example be from 1 to 100 microns, especially from 1 to 70 microns, thick. As well as providing a covering over the pores of the support, the growth of zeo-type material may if desired extend through the pores, into the body of the support.

Preferably the crystal growth is completely free from pin-holes. In reality, of course, it may be difficult to produce a perfect membrane, and the term "essentially continuous" is intended to include membranes having a small number of pin-holes in the crystal growth. When membranes are prepared according to the process of our copending application, such pin-holes are fissures formed when the faces of growing crystals do not match up exactly. Such-pin holes may be present immediately after preparation of the membrane, but are also likely to occur after dehydration or ion-exchange of the membrane, or during the working life of the membrane. The membranes are clearly distinct from prior art membranes where the crystal growth has major discontinuities, the growth resulting in macro-pores.

Minor quantities of pin-holes in the membrane can be blocked using a suitable post-treatment, for example using an organic material, for example a polymer or an organo silicon material, or an inorganic material, for example an inorganic silicon material, capable of cross-linking with silicon and oxygen atoms.

The essentially continuous crystal growth in the finished membranes, supplemented if necessary by a post-treatment, is such that there is no access from one side of the membrane to the other except through the intra-crystalline pores of the zeo-type material.

The finished membranes made by a process incorporating the acid treatment step of the invention have a wide range of applications. They may for example be used for dehydration, for example to remove water from materials such as LPG, natural gas or alcohols. Such membranes are very much more effective than the traditionally used organic polymer membranes, for example the commercially available caesium polyacrylate membranes described in WO 86/00819, in dehydrating mixtures of water with other liquids; they have the additional advantage of being useful at relatively high temperatures.

They may be used for removing linear alkanes, olefins or other functionalised hydrocarbons from a mixture containing more highly branched compounds, for example in the octane-enhancing of fuels, reforming, dewaxing, or the separation of normal and iso butanes.

Combined catalysis and separation processes are another important application. Examples include hydrogenation and dehydrogenation of linear hydrocarbons in the presence of more highly branched compounds such as isoalkanes, isoalkenes and aromatics. The membranes may be used in catalysis to shift thermodynamic equilibria towards desired products, for example by removal of hydrogen from a dehydrogenation reaction or removal of water from an esterification reaction or an alcohol dehydrogenation.

The following Examples illustrate the invention.

The chemicals used in the Examples are:-

| | |
|---|---|
| Sodium Aluminate : | ex BDH Technical grade nominally containing 40% $Al_2O_3$, 30% $Na_2O$ and 30% $H_2O$ |
| Sodium Silicate : | ex BDH specific gravity 1.57 |
| Triethanolamine : | ex BDH |

Example 1

Preparation of Membranes

The substrate used was a Bekipor (Trade Mark) ST5BL3 filter. This consists of very fine 316 stainless steel fibres brought together in a 3-dimensional labyrinthic structure. The fibres are arranged randomly into a homogeneous web. This web is further compacted and sintered to give a very strong metallic bond at each fibre crossing. The average pore size measured by Coulter porometer is 5.3 microns and the diameter of the wires on the top surface is 6.5 microns. Figure 1 is a scanning electron micrograph (SEM), magnification x500, of this filter.

A 7 cm diameter disc was cut out from a sheet of the above material and degreased by soaking it in a beaker containing approximately 200 ml of toluene for 1 hour (liquor being replaced 3 times). The toluene was then replaced by acetone and the washing procedure repeated. The metal mesh was subsequently air dried by carefully placing it in a clean petri dish, loosely covering with aluminium foil and placing in a fume cupboard overnight. It was then soaked in a beaker containing 1 molar hydrochloric acid solution overnight at room temperature, washed thoroughly with distilled water and air dried.

The clean, dry metal mesh was placed in a QVF (Trade Mark) glass tube (80 cm diameter). Care was taken not to contaminate the metal, by using rubber gloves. The QVF tube was equipped with PTFE end plates which were held in place by stainless steel flanges held in place by metal nuts and bolts. The vessel had previously been cleaned by washing it with distilled water, acetone, toluene and finally acetone before being dried in a stream of clean, dry air.

Two solutions, A and B, were prepared separately as follows in two 16 oz glass bottles.

Solution A: 34.4 g sodium aluminate (BDH Technical Grade), and 155.0 g distilled, deionised water. The aluminate was analysed with results as follows: 27.44% $Na_2O$, 43.36% $Al_2O_3$ and 29.20% $H_2O$.

The mixture was then mechanically shaken until dissolved. Solution B: 53.4 g sodium silicate specific gravity 1.57 (BDH), analysis gave 13.53 % $Na_2O$, 29.28% $SiO_2$ and 57.20% $H_2O$; and 155.0 g distilled, deionised water.

Solution A was added slowly to solution B with both stirring and shaking (by hand) to ensure complete and even mixing (it is important to ensure that no lumps of hydrogel are formed). This resulted in a hydrogel having the nominal molar composition:

$2.0Na_2O:Al_2O_3:2.0SiO_2:143H_2O$

The molar composition bsed on the analysis figures above was:

$1.83\ Na_2O:Al_2O_3:1.78\ SiO_2:132.9\ H_2O$

The hydrogel was slowly poured into the QVF tube containing the metal mesh. The tube was sealed with the second PTFE disc and metal end flanges and placed in an oven pre-heated to 90° for 24 hours. Subsequently it was removed and allowed to cool for 1 hour. The tube was opened at one end and the solution poured away whilst the metal mesh was carefully removed with a long flat rod ensuring that the mesh was not bent or damaged in any way. The mesh was placed in a glass beaker and washed three time with 100 ml aliquots of distilled, deionised water, swirling the solution each time to ensure complete removal of residual zeolite solution. The mesh was air dried in a petri dish overnight, as before.

The surface of the dried zeolite coated mesh was subsequently wiped with a clean lens tissue in order to remove any loose, powdery deposits which may have formed on the surface. The mesh was inverted and the process repeated. The mesh was re-inverted and the top face cleaned again. It was then washed with water and left to dry overnight. Figure 2 is an SEM of the resulting product at magnification x1500. The dark areas of the SEM clearly show the cubic crystal growth of zeolite directly on the steel fibres. A good initial coverage of relatively small crystals is obtained.

Example 2 (Comparative)

The procedure of Example 1 was repeated except that the HCl treatment of the support was omitted. Figure 3 is an SEM, magnification x1500, of the resulting mesh. Inferior coverage to that illustrated in Figure 2 is apparent.

Examples 3 and 4

The procedure of Example 1 was repeated using 1M sulphuric acid and phosphoric acid instead of hydrochloric acid. The percentage coverage of the surface with zeolite was estimated. The estimate was made by visual examination of SEM's magnification x500. Each SEM was divided into a 5x5 matrix of

rectangles. Nine of these rectangles (in same position for each SEM) were examined, and for each rectangle the percentage coverage of the support by zeolite was estimated. The overall estimate of coverage was a simple average of the estimated coverage in each of the nine rectangles. The results of Examples 1 to 4 are summarised in Table 1.

TABLE 1

| Coverage of Support Surface with Zeolite | | |
|---|---|---|
| Example No. | Acid Used | % Coverage of Surface by Zeolite |
| 1 | HCl | 39 |
| 2 (Comparative) | - | 20 |
| 3 | $H_2SO_4$ | 23 |
| 4 | $H_3PO_4$ | 24 |

Example 5

Hydrogel Preparation

11.2 grams of sodium silicate solution specific gravity 1.57 was mixed with 78.5 grams of distilled water and 11.2 grams of triethanolamine to form solution A. 8.9 grams of sodium aluminate was dissolved in 78.5 grams of distilled water and 11.2 grams of triethanolamine to form solution B. Solution B was added to solution A over 5 minutes with sufficient stirring to maintain homogeneity.

Substrate

Sintered 316 stainless steel filters of 15 micron porosity were used. The filter is commercially available from the NUPRO Company, 4800 East 345th St Willoughby, Ohio 44094. Cat No. SS-4FE-15.

One filter was immersed in 5% aqueous nitric acid solution (107 grams of solution) for 16 hours and then washed with distilled water.

Zeolite Crystallisation Step

The acid treated filter along with an untreated filter were immersed in the zeolite gel (prepared as described above) contained in a glass vessel. The vessel was sealed and placed in an oven maintained at 95°C. The vessel was inspected periodically until the zeolite was crystallised and settled at the bottom of the vessel. The filters were removed, washed with distilled water, tested as described below, and immersed again in a zeolite gel and another layer of zeolite was crystallised as described above. The zeolite crystallisation treatment was repeated several times.

Test Procedure

The zeolite coated filter was tested in a standard Nupro filter housing. A burette was attached to the inlet and the outlet was either connected to vacuum or left open to atmosphere. A measure of the degree of zeolite coverage was obtained by timing the drop in water level in the burette. The results are shown in Figures 4 and 5.

Figure 4 shows the drop in the water level in the burette versus the number of zeolite crystallisation treatment with no vacuum attached to the outlet. It can be seen that the filter which had received the acid treatment required fewer treatments than the untreated filter to match the same rate of water drop.

Figure 5 shows the same comparisons as in Figure 5 but with vacuum (200 mbars reduced pressure) attached to the outlet and with a higher number of zeolite crystallisation treatments. As in Figure 4 the acid treated filter gave a higher coverage of zeolite and hence reduced porosity.

**Claims**

1. A process for the deposition of a zeo-type material on a porous metallic support, which comprises immersing at least one surface of the porous metallic support in a synthesis gel which is capable of crystallising to produce a crystalline zeo-type material, and inducing crystallisation of said gel so that zeo-type material crystallises on the support; characterised in that prior to immersion in the gel, said surface of the metallic support has been treated with an acid.

2. A process as claimed in claim 1, in which the acid is a mineral acid.

3. A process as claimed in claim 2, in which the acid is hydrochloric acid.

4. A process as claimed in any one of claims 1 to 3, in which the acid is used in the form of a 0.01 to 5 molar aqueous solution.

5. A process as claimed in any one of claims 1 to 4, in which the support is made from stainless steel.

6. A process as claimed in any one of claims 1 to 5, in which the average pore diameter of the support is in the range of from 0.1 to 2000 microns.

7. A process for the preparation of a membrane, which comprises a process as claimed in any one of claims 1 to 6, characterised in that, after crystallisation of said gel, the support is removed from the mix, and the immersion and crystallisation steps repeated one or more times to obtain the required membrane.

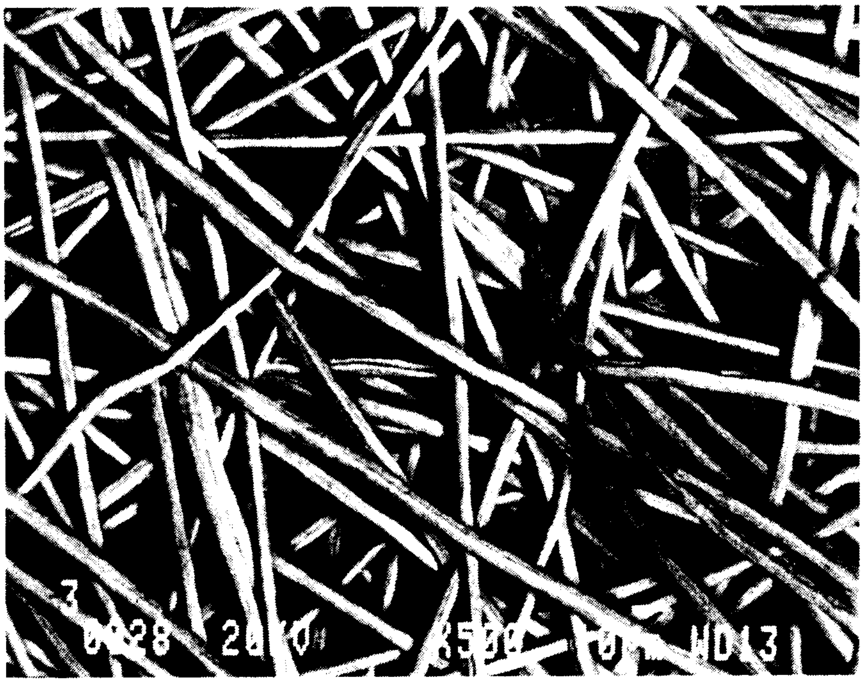


FIG. 1

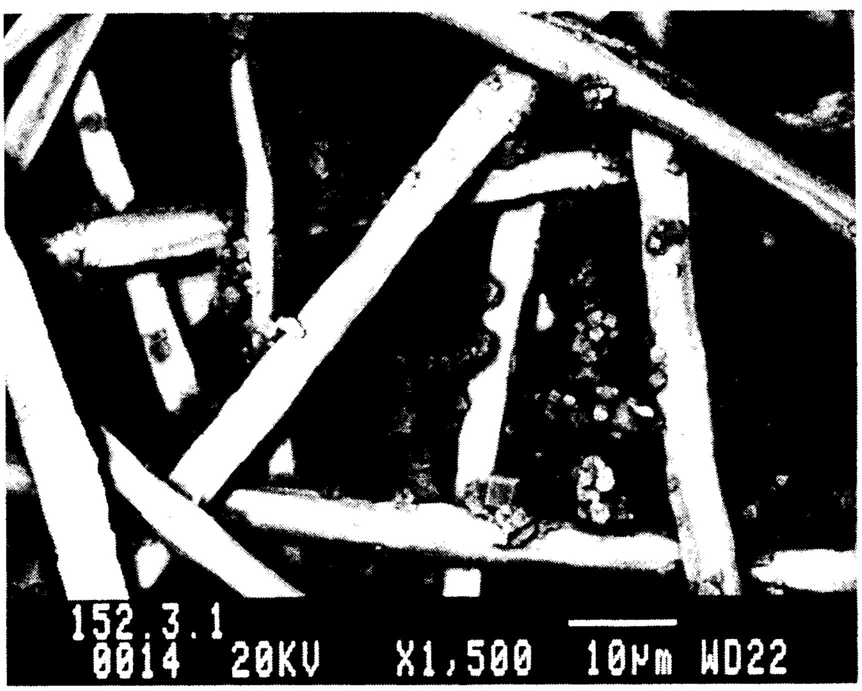


FIG. 2

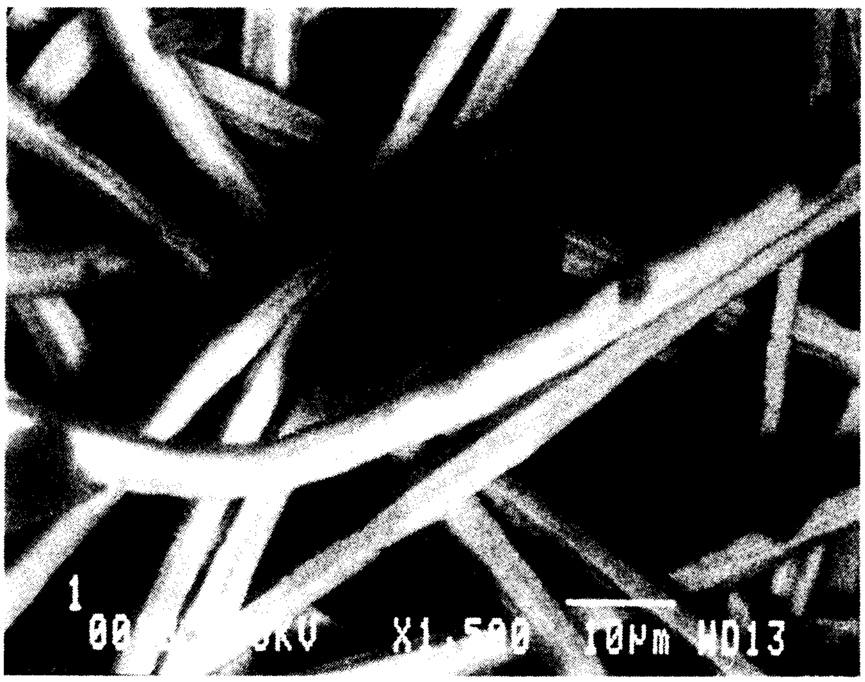


FIG. 3

FIG. 4

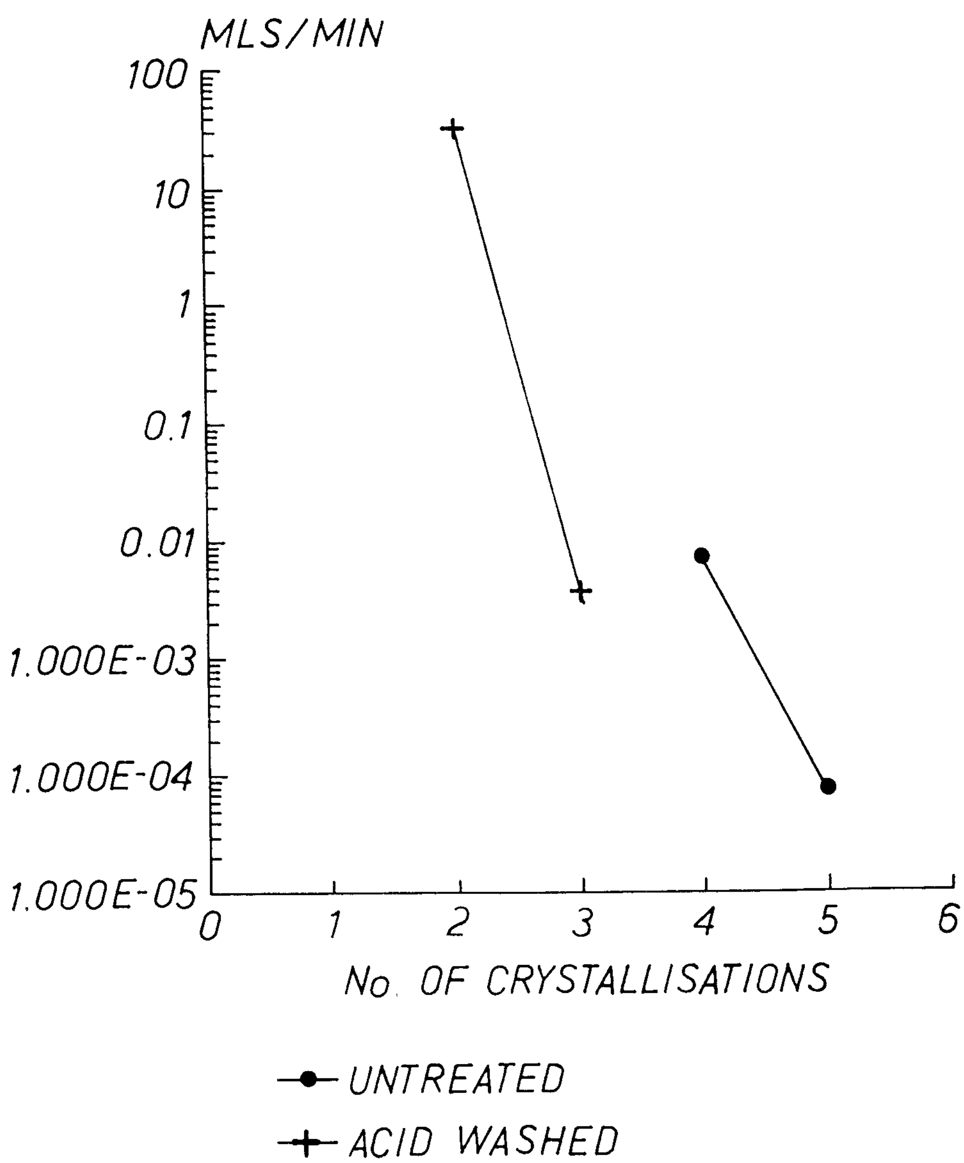
MLS/MIN
100
10
1
0.1
0.01
1.000E-03
1.000E-04
1.000E-05
0
1
2
3
4
5
6
No. OF CRYSTALLISATIONS
UNTREATED
ACID WASHED

FIG. 5

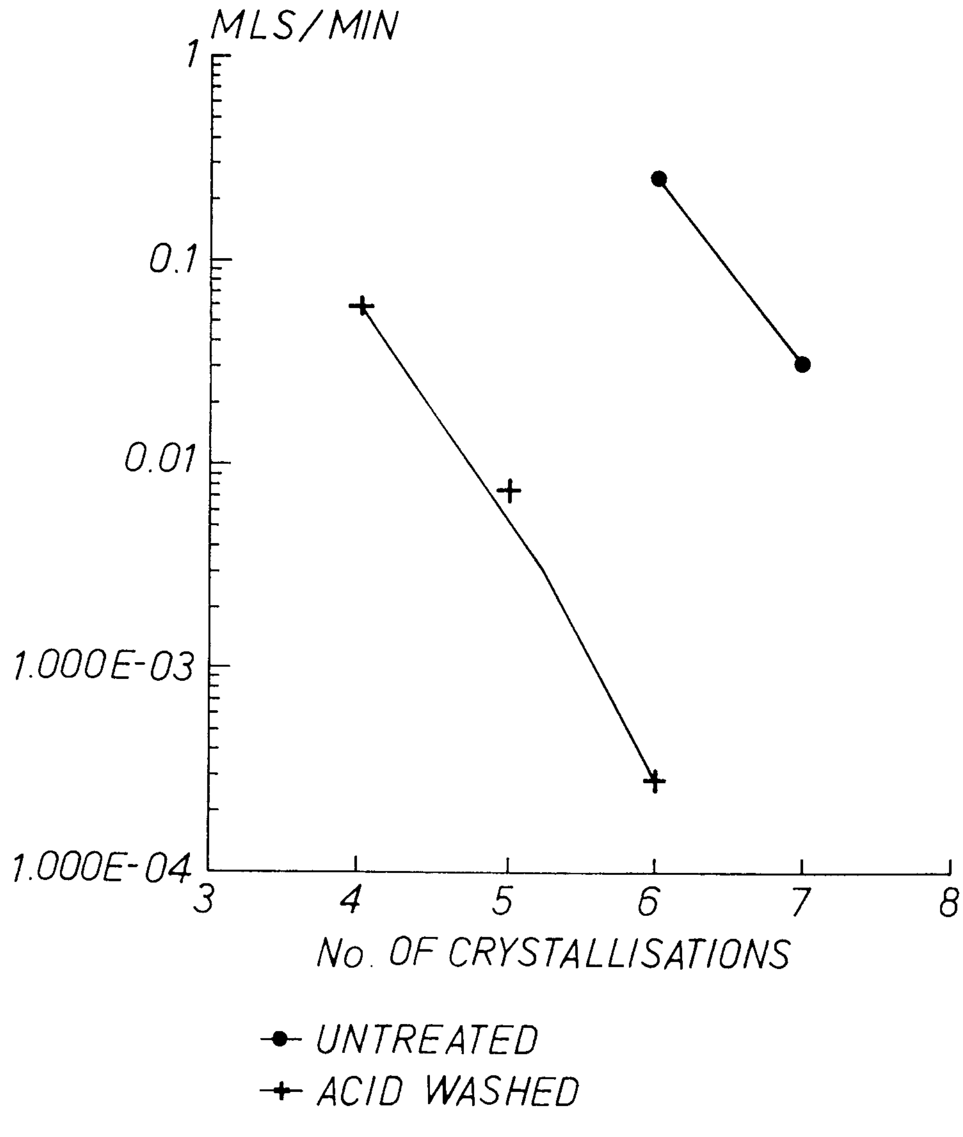
MLS/MIN
1
0.1
0.01
1.000E-03
1.000E-04
3
4
5
6
7
8
No. OF CRYSTALLISATIONS
UNTREATED
ACID WASHED

European Patent Office

# EUROPEAN SEARCH REPORT

Application Number

**EP 91 30 9238**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 135 069 (H. SUZUKI)<br>* Page 16, lines 9-10 *<br>– – – | | B 01 D 71/02 //<br>B 01 D 69/10<br>B 01 J 29/00 |
| A | US-A-3 730 910 (E.W. ALBERS)<br>* Column 7, lines 18-24 *<br>– – – – – | | |
| | | | **TECHNICAL FIELDS SEARCHED (Int. Cl.5)** |
| | | | B 01 D 71/00<br>B 01 D 69/00<br>B 01 J 29/00 |

The present search report has been drawn up for all claims

| Place of search | Date of completion of search | Examiner |
|---|---|---|
| The Hague | 18 December 91 | DEVISME F.R. |

**CATEGORY OF CITED DOCUMENTS**

X : particularly relevant if taken alone
Y : particularly relevant if combined with another document of the same catagory
A : technological background
O : non-written disclosure
P : intermediate document
T : theory or principle underlying the invention
E : earlier patent document, but published on, or after the filing date
D : document cited in the application
L : document cited for other reasons

& : member of the same patent family, corresponding document